# FASCICULE DE BREVET EUROPEEN

(11) **EP 3 539 771 B1**
(45) Date de publication et mention de la délivrance du brevet: **29.12.2021**
(21) Numéro de dépôt: 19159408.4
(22) Date de dépôt: 26.02.2019
(51) Int. Cl.: B32B 37/00, B29C 70/88, B32B 15/14, B64D 45/02

(54) **PROCEDE DE FABRICATION D'UNE STRUCTURE COMPOSITE MUNIE D'UNE COUCHE ELECTRIQUEMENT CONDUCTRICE**
HERSTELLUNGSVERFAHREN EINER VERBUNDSTRUKTUR, DIE MIT EINER ELEKTRISCH LEITENDEN SCHICHT AUSGESTATTET IST
METHOD FOR MANUFACTURING A COMPOSITE STRUCTURE PROVIDED WITH AN ELECTRICALLY CONDUCTIVE LAYER

(30) Priorité: 12.03.2018 FR 1870270
(43) Date de publication de la demande: 18.09.2019
(73) Titulaire: Airbus Helicopters, 13725 Marignane Cedex (FR)
(72) Inventeur: CHATAIN, Bertrand, 13127 Vitrolles (FR); MEYER, Marc, 13111 Coudoux (FR)
(74) Mandataire: GPI & Associés

(56) Documents cités:
- EP-A1- 1 011 958
- EP-A2- 0 399 944

## Description

La présente invention concerne un procédé de fabrication d'une structure composite munie d'une couche électriquement conductrice, et notamment une structure composite pour un aéronef.

Une structure composite d'un aéronef peut comprendre une protection électromagnétique. Une telle protection électromagnétique peut avoir pour fonction de protéger l'aéronef des effets de la foudre et/ou de métalliser des équipements.

La protection électromagnétique d'une structure composite peut prendre la forme d'une grille en cuivre noyée dans l'épaisseur de cette structure composite. Dès lors, la structure composite peut comprendre un sous-ensemble inférieur comprenant une pluralité de plis de fibres, par exemple des plis de fibres de carbone. Ce sous-ensemble inférieur est recouvert de la grille en cuivre qui forme une couche électriquement conductrice.

La grille en cuivre peut être recouverte d'un sous-ensemble supérieur comprenant au moins un pli de fibres, par exemple un pli de fibres de verre. Pour connecter électriquement la grille en cuivre à un autre organe, un opérateur met en œuvre une étape de ponçage. Durant cette étape de ponçage, l'opérateur utilise des moyens de décapage mécanique pour retirer dans des zones de connexion électrique le sous-ensemble supérieur et mettre à nu la grille en cuivre. Cette opération s'avère d'une grande technicité pour que la grille en cuivre ne soit pas endommagée. Le ponçage est alors favorablement manuel.

Selon un procédé, un patch en cuivre est collé sur la grille en cuivre au niveau d'une zone de connexion électrique afin que cette zone de connexion électrique ne soit pas directement recouverte par la couche supérieure. Bien qu'efficace, le patch de cuivre augmente la résistance électrique de l'interface ainsi réalisée. Les performances de conduction électrique des courants électriques générés par la foudre dans la zone de connexion électrique sont alors dégradées.

Le document EP 2496411 décrit un stratifié de protection électromagnétique.

Le document EP 1011958 décrit un procédé durant lequel un tissu est recouvert d'un treillis métallique. Ce treillis métallique est ensuite recouvert d'un ruban en silicone. L'ensemble est alors enroulé dans un film plastique formant un sac à vide connecté à une pompe à vide.

Le document EP 0399944 décrit une structure comprenant notamment un grillage métallique et des bandes non poreuses. Cette structure comprend une couche conductrice pour le blindage contre la foudre ou les interférences électromagnétiques. Deux couches de surface sont agencées sur des côtés opposés de la couche conductrice. Les couches de surface ont des zones découpées pour recevoir des surfaces d'accouplement. Deux rubans barrière sont placés entre la couche conductrice et les couches de surface respectives.

Le document EP 1620261 décrit une structure composite comprenant une armature non-tissée contenant un élément actif du point de vue électromagnétique en une quantité inférieure à 0,1 % en volume par unité de volume de composite à matrice polymère.

Le document EP 1011958 est aussi connu. Ce document décrit une méthode de fabrication d'un corps composite. Cette méthode comprenant les étapes suivantes : placer un tissu de fibres conductrices électriquement dans un moule avec une résine non polymérisée, placer un treillis métallique directement sur le tissu de fibres conductrices électriques, remplir entièrement le treillis métallique avec la résine non polymérisée de sorte que seule sa face avant forme une surface de contact sans résine, recouvrir le treillis métallique avec une bande adhésive en silicone, polymériser ensuite la résine non polymérisée et enlever la bande adhésive après la fin de la phase de polymérisation.

La présente invention a alors pour objet de proposer un procédé alternatif visant à optimiser la zone de connexion électrique d'une structure composite.

L'invention vise donc un procédé de fabrication d'une structure composite, cette structure composite comprenant un sous-ensemble inférieur, le sous-ensemble inférieur étant au moins muni de premières fibres et d'une première résine, la structure composite comprenant une couche électriquement conductrice munie d'un organe métallique, la structure composite comprenant un sous-ensemble supérieur au moins muni de deuxièmes fibres et d'une deuxième résine.

Ce procédé comporte les étapes suivantes :
- agencement de l'organe métallique sur le sous-ensemble inférieur,
- placement d'au moins un masque sur au moins une zone de connexion électrique de l'organe métallique, ledit au moins un masque s'étendant selon une direction en élévation d'une face inférieure disposée contre l'organe métallique jusqu'à une face supérieure, ledit au moins un masque comprenant au moins une cavité, ladite au moins une cavité traversant de part en part le masque selon la direction en élévation en s'étendant de la face inférieure jusqu'à la face supérieure,
- placement du sous-ensemble supérieur au moins contre une partie de la face supérieure de l'organe métallique non recouverte dudit au moins un masque.

Eventuellement, l'organe métallique peut comprendre des ouvertures traversant cet organe métallique. L'expression « ledit organe métallique comprenant des ouvertures traversant cet organe métallique » signifie que l'organe métallique comporte des interstices, et par exemple des ouvertures allant du sous-ensemble inférieur jusqu'au sous-ensemble supérieur.

Eventuellement la première résine et la deuxième résine sont identiques.

En outre, le sous ensemble inférieur peut être confectionné durant une étape de fabrication en mettant en œuvre des méthodes usuelles. Par exemple au moins un pli de premières fibres est drapé, le pli étant imprégné de la première résine mais non cuit.

Le sous-ensemble inférieur peut être disposé sur un moule.

Ce sous-ensemble inférieur est ensuite recouvert au moins localement par au moins un organe métallique. Un tel organe métallique est un organe électriquement conducteur. Par exemple, l'organe métallique comporte une plaque et/ou une grille et/ou un treillis métallique.

Dès lors, au moins un masque, muni d'une ou plusieurs cavités qui débouchent en dehors du masque, est placé sur au moins une zone de connexion électrique. Chaque masque peut prendre la forme d'une membrane microporeuse ou d'une peau perforée. Un masque peut être naturellement poreux, ou peut présenter un matériau plein, percé pour réaliser les cavités. Le masque peut avoir des dimensions plus faibles que la structure composite obtenue par ce procédé.

Ensuite, le sous-ensemble supérieur est mis en place. Le sous-ensemble supérieur peut être directement confectionné sur au moins l'organe métallique, voire sur au moins un masque.

Ce sous-ensemble supérieur recouvre a minima l'organe métallique. Eventuellement ce sous-ensemble supérieur recouvre au moins une zone du sous-ensemble inférieur non recouverte par l'organe métallique et/ou ce sous-ensemble supérieur recouvre au moins un masque. Par exemple au moins un pli de deuxièmes fibres est drapé, le pli étant imprégné de la deuxième résine mais non polymérisé.

Eventuellement, le sandwich ainsi constitué est alors polymérisé.

Ainsi, ce procédé prévoit l'intégration dans un moule d'au moins un masque muni d'une ou plusieurs cavités.

Lors de la polymérisation et sous l'effet éventuel d'une mise en pression, les diverses résines du sandwich se fluidifient et fluent au travers de chaque masque par ses cavités, voire autour de l'organe métallique et/ou le cas échéant au travers des ouvertures de l'organe métallique. Par exemple de la résine flue au travers de l'organe métallique en étant pompée par le masque. L'usage d'un masque muni de cavités tend alors à optimiser la cohésion de toutes les couches par un fluage généralisé de la ou des résines entre toutes les couches.

L'organe métallique est alors bien intégré dans la structure composite réalisée.

Après polymérisation, le masque est enlevé, le cas échéant après avoir découpé ou poncé la partie du sous-ensemble supérieur qui recouvre le masque. Les diverses résines contenues dans les cavités d'un masque sont alors éventuellement retirées, par exemple manuellement et/ou en faisant chauffer le masque. Un masque peut alors être recyclable.

Ce procédé peut tendre de plus à minimiser le risque d'endommager l'organe métallique. Une étape de ponçage du sous-ensemble supérieur n'est pas nécessaire en l'absence du sous-ensemble supérieur sur le masque. En présence d'une partie du sous-ensemble supérieur sur le masque, le masque protège l'organe métallique lors du ponçage éventuel de cette partie du sous-ensemble supérieur.

En outre, ce procédé peut tendre à réduire un temps de préparation d'une surface à métalliser, puisque le masque permet d'obtenir une zone de connexion électrique propre.

Une bonne reproductibilité peut aussi être obtenue.

Le procédé peut de plus comporter une ou plusieurs des caractéristiques qui suivent.

Selon un aspect, le masque peut inclure un matériau non adhésif.

Eventuellement, le masque comporte uniquement un matériau non adhésif.

Ce matériau non adhésif peut être en contact avec l'organe métallique afin de ne laisser aucune trace sur cet organe métallique lorsque le masque est enlevé.

Un tel matériau non adhésif peut être choisi dans le groupe des matériaux non adhérents qui doivent conserver leurs propriétés physiques, par exemple leur forme et/ou leur porosité jusqu'à une température supérieure ou égale à la température de polymérisation de la structure composite.

De manière complémentaire, le matériau non adhésif peut être choisi pour être relativement malléable à froid afin de faciliter sa mise en place.

Selon une variante, ce matériau non adhésif est du polytétrafluoroéthylène.

Selon une variante, ce matériau non adhésif est du silicone.

Selon un autre aspect, le sous-ensemble inférieur peut comporter au moins un premier pli des premières fibres, voire une pluralité de premiers plis.

Par exemple le sous-ensemble inférieur comporte au moins un premier pli de fibres de carbone imprégnées d'une première résine.

Selon un autre aspect, le sous-ensemble supérieur comporte au moins un deuxième pli des deuxièmes fibres, par exemple un deuxième pli comprenant des fibres de verre.

Selon un autre aspect, l'organe métallique peut inclure un grillage en métal.

Eventuellement, ce grillage en métal est imprégné d'une troisième résine.

Un tel organe métallique peut être du type connu sous la dénomination « astrostrike ».

Eventuellement les première résine, deuxième résine et troisième résine sont identiques.

Alternativement, le grillage en métal peut être sec, à savoir pas pré-imprégné de résine.

Selon un autre aspect, ladite au moins une cavité peut être effilée selon un sens allant de la face supérieure vers la face inférieure.

Cette forme permet de limiter la surface de contact entre chaque cavité et l'organe métallique pour faciliter le retrait du masque, tout en permettant à la cavité d'avoir un volume maximisé pour stocker la résine qui aura flué dans cette cavité

Selon un autre aspect, ladite au moins une cavité a la forme d'un cône tronqué, cette forme d'un cône tronqué s'étendant d'une base affleurant la face supérieure vers un sommet affleurant la face inférieure.

Pour minimiser la surface de contact avec l'organe métallique le sommet du cône est situé du côté de l'organe métallique.

Selon un aspect, le masque peut être déformable élastiquement et manuellement.

Un opérateur peut alors tordre manuellement le masque pour évacuer la résine contenue dans ses cavités.

Selon un aspect, le masque peut avoir une épaisseur entre la face inférieure et la face supérieure comprise entre 0.5 millimètre et 1.5 millimètre.

Le masque a ainsi une épaisseur de l'ordre de un millimètre pour conserver une tenue mécanique minimale, surtout au moment du retrait du masque chargé de résine.

Selon un aspect, ladite au moins une cavité peut présenter une section inférieure affleurant la face inférieure, la section inférieure étant contenue dans un cercle, ledit cercle ayant un diamètre compris entre 0.3 millimètre et 3 millimètres.

Selon un aspect, ladite au moins une cavité peut inclure au moins deux cavités.

Eventuellement chaque cavité peut présenter une section inférieure affleurant la face inférieure, chaque section inférieure étant contenue dans un cercle ayant un diamètre, deux cavités adjacentes pouvant être séparées par une distance comprise entre deux fois ledit diamètre et 10 fois ledit diamètre du cercle contenant une des deux cavités adjacentes.

Selon un aspect, le procédé comporte une étape de polymérisation à vide faisant suite au placement du sous-ensemble supérieur sur l'organe métallique puis une étape durant laquelle ledit au moins un masque est retiré, voire une étape pour enlever une partie du sous-ensemble supérieur recouvrant un masque.

L'invention et ses avantages apparaîtront avec plus de détails dans le cadre de la description qui suit avec des exemples donnés à titre illustratif en référence aux figures annexées qui représentent :
- la figure 1, un schéma présentant une vue de côté d'une structure composite en cours de fabrication selon le procédé revendiqué,
- la figure 2, un schéma représentant une vue de dessus d'un organe métallique, et
- les figures 3 à 5, des schémas présentant des coupes d'un masque.

Les éléments présents dans plusieurs figures distinctes sont affectés d'une seule et même référence.

Trois directions X, Y et Z orthogonales les unes par rapport aux autres sont représentées sur les figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

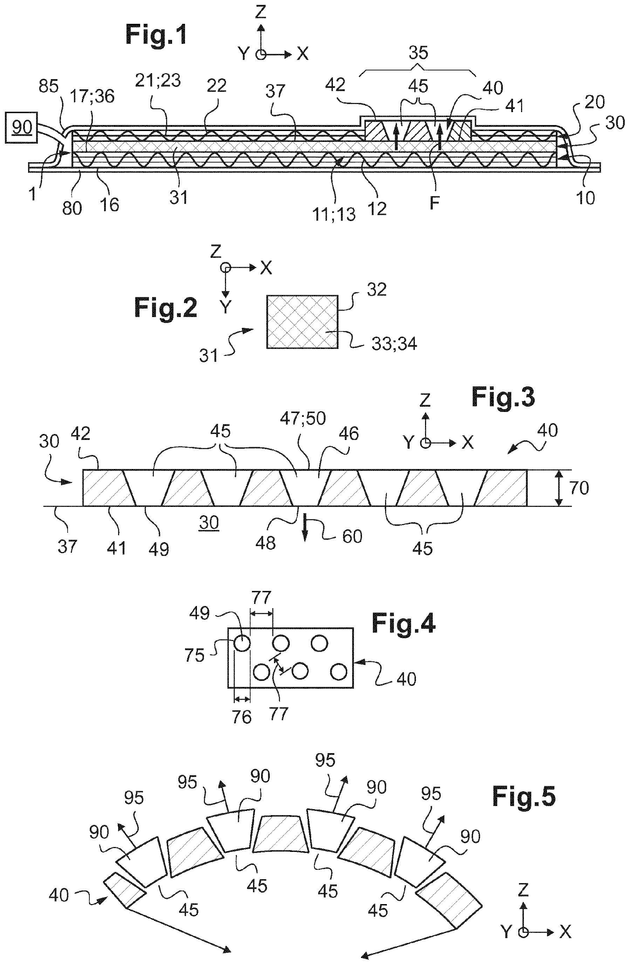

En référence à la figure 1, l'invention vise un procédé pour fabriquer une structure composite 1.

Cette structure composite 1 comprend un sous-ensemble inférieur 10. Le sous-ensemble inférieur est au moins muni de premières fibres 11 et d'une première résine 12.

De plus, la structure composite 1 est munie d'une couche électriquement conductrice 30. Cette couche électriquement conductrice 30 recouvre au moins partiellement une face du sous-ensemble inférieur 10. Dès lors, soit la couche électriquement conductrice 30 recouvre totalement le sous-ensemble inférieur 10, soit la couche électriquement conductrice 30 recouvre localement le sous-ensemble inférieur 10. Cette couche électriquement conductrice 30 comporte un organe métallique 31, par exemple en cuivre, qui recouvre au moins partiellement le sous-ensemble inférieur 10.

En outre, la structure composite 1 est munie d'un sous-ensemble supérieur 20 qui recouvre localement l'organe métallique 31. Dans des zones de connexion électriques 35, le sous-ensemble supérieur 20 ne doit pas recouvrir l'organe métallique 31 à l'issue du procédé de fabrication. Si l'organe métallique ne recouvre pas certaines parties du sous-ensemble inférieur 10, le sous-ensemble supérieur peut recouvrir au moins une de ces parties.

Selon le procédé de l'invention, le sous-ensemble inférieur 10 peut être placé sur un moule 80, voire fabriqué sur le moule.

Par exemple, le sous-ensemble inférieur 10 comporte au moins un premier pli 13 muni des premières fibres 11 préimprégnées de la première résine 12, voire un empilement de premiers plis 13. Par exemple, des premiers plis non polymérisés sont empilés sur le moule 80. Les premières fibres peuvent comprendre des fibres usuelles, et à titre illustratifs des fibres de carbone.

Le sous-ensemble inférieur 10 s'étend alors selon une direction en élévation d'un côté inférieur 16 accolé contre le moule 80 jusqu'à un côté supérieur 17.

Dès lors, le procédé comporte une étape d'agencement de l'organe métallique 31 sur le sous-ensemble inférieur 10.

Durant cette étape, au moins un organe métallique est ainsi apposé sur le sous-ensemble inférieur 10.

En référence à la figure 2, l'organe métallique peut comprendre des ouvertures 33 traversant cet organe métallique 31. Une telle ouverture 33 peut notamment être une ouverture 33 qui traverse de part en part l'organe métallique selon son épaisseur.

Par exemple, un organe métallique 31 inclut un grillage en métal 32, tel éventuellement qu'un grillage en cuivre.

De plus, le grillage en métal 32 peut être imprégné d'une résine dite « troisième résine 34 ». Cette résine peut être non polymérisée et peut le cas échéant se trouver dans les ouvertures 33.

La troisième résine 34 peut être du même type que la première résine 12.

Par ailleurs et en référence à la figure 1, l'organe métallique s'étend selon la direction en élévation Z d'une facette inférieure 36 jusqu'à une facette supérieure 37.

En outre, le procédé comporte une étape de placement par un opérateur d'au moins un masque 40 sur au moins une zone de connexion électrique 35 de l'organe métallique 31, et donc sur le dessus de l'organe métallique 31. La figure 1 illustre un unique masque 40. Néanmoins, la structure composite 1 peut comprendre plusieurs zones de connexion électriques 35 recouvertes chacune d'au moins un masque 40.

En référence à la figure 3, chaque masque 40 s'étend selon une direction en élévation Z d'une face inférieure 41 jusqu'à une face supérieure 42. L'opérateur positionne le masque en accolant la face inférieure 41 du masque contre la facette supérieure 37 de l'organe métallique. Entre la face inférieure 41 et la face supérieure 42, chaque masque 40 peut avoir une épaisseur 70 comprise entre 0.5 millimètre et 1.5 millimètre.

Par ailleurs, chaque masque 40 peut comprendre un matériau non adhésif tel que du polytétrafluoroéthylène ou du silicone.

De plus, au moins une cavité 45 voire des cavités 45 traversent de part en part le masque 40 selon la direction en élévation Z en s'étendant de la face inférieure 41 jusqu'à la face supérieure 42.

Une telle cavité peut de plus être effilée selon un sens 60 allant de la face supérieure 42 vers la face inférieure 41. Dès lors la cavité présente une section inférieure 49 au niveau de la face inférieure 41 et une section supérieure 50 au niveau de la face supérieure 42, la section inférieure 49 présentant une surface plus petite que la surface couverte par la section supérieure 50.

Par exemple, une telle cavité 45 a la forme d'un cône tronqué 46. Ce cône tronqué s'étend donc d'une base 47 représentée par la section supérieure 50 vers un sommet 48 représenté par la section inférieure 49.

Selon un autre aspect et en référence à la figure 4, la section inférieure 49 d'une cavité 45 peut être contenue dans un cercle 75, voire peut avoir la forme d'un cercle. Ce cercle 75 peut alors avoir un diamètre 76 compris entre 0.3 millimètre et 3 millimètres.

Selon un autre aspect, en présence de plusieurs cavités, les cavités peuvent être identiques.

Selon un autre aspect, une distance 77 sépare deux cavités 45 adjacentes et notamment leurs sections inférieures 49. Cette distance peut être comprise entre deux fois le diamètre 76 et 10 fois le diamètre 76 du cercle 75 contenant une des deux cavités 45 adjacentes, et par exemple le cas échéant le cercle de plus grand diamètre.

Par ailleurs et en référence à la figure 1, le procédé comporte une étape de placement du sous-ensemble supérieur 20 au moins contre la face supérieure 42 de l'organe métallique 31 non recouverte de masques, voire sur chaque masque 40 voire sur une partie du sous-ensemble inférieur 10.

Par exemple, le sous-ensemble supérieur 20 est au moins muni de deuxièmes fibres 21 et d'une deuxième résine 22, et notamment d'au moins un deuxième pli 23 des deuxièmes fibres 21. Par exemple, le sous-ensemble supérieur 20 comprend un unique deuxième pli de deuxièmes fibres préimprégnées de la deuxième résine 22, tel qu'un pli de fibres de verre par exemple.

La deuxième résine 22 peut être identique à la première résine 12 voire à la troisième résine 34.

Alternativement, les résines peuvent être différentes. Des résines usuelles peuvent être utilisées.

Eventuellement, un sac à vide 85 relié à une pompe à vide est disposé autour de la structure composite 1 en cours de fabrication.

Dès lors, le procédé peut comporter une étape de polymérisation à vide. Durant cette étape, les résines fluent selon les flèches F et tendent à remplir les cavités 45 du masque.

A l'issue de la polymérisation, le sac à vide est enlevé. Si une partie de la couche supérieure 20 recouvre un masque, cette partie est enlevée.

Enfin, chaque masque est retiré pour mettre à jour chaque zone de connexion électrique.

En référence à la figure 5, chaque masque 40 peut être déformable élastiquement et manuellement.

Dès lors, un opérateur peut tordre le masque pour évacuer la résine 90 présente dans les cavités 45 selon les flèches 95. Si nécessaire, le masque peut être chauffé pour faciliter son nettoyage.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Procédé de fabrication d'une structure composite (1), ladite structure composite (1) comprenant un sous-ensemble inférieur (10), le sous-ensemble inférieur (10) étant au moins muni de premières fibres (11) et d'une première résine (12), ladite structure composite (1) comprenant une couche électriquement conductrice (30) munie d'un organe métallique (31), ladite structure composite (1) comprenant un sous-ensemble supérieur (20) au moins muni de deuxièmes fibres (21) et d'une deuxième résine (22), le procédé comportant un agencement dudit organe métallique (31) sur le sous-ensemble inférieur (10) et un placement d'au moins un masque (40) sur au moins une zone de connexion électrique (35) dudit organe métallique (31)
**caractérisé en ce que** ledit placement d'au moins un masque (40) comporte le placement d'au moins un masque (40) s'étendant selon une direction en élévation (Z) d'une face inférieure (41) disposée contre l'organe métallique (31) jusqu'à une face supérieure (42), ledit au moins un masque (40) comprenant au moins une cavité (45), ladite au moins une cavité (45) traversant de part en part le masque (40) selon la direction en élévation (Z) en s'étendant de la face inférieure (41) jusqu'à la face supérieure (42), ledit procédé comportant un placement du sous-ensemble supérieur (20) au moins contre une partie de la face supérieure (42) de l'organe métallique (31) non recouverte dudit au moins un masque.

2. Procédé selon la revendication 1,
**caractérisé en ce que** ledit masque (40) inclut un matériau non adhésif.

3. Procédé selon la revendication 2,
**caractérisé en ce que** ledit matériau non adhésif est du polytétrafluoroéthylène.

4. Procédé selon la revendication 2,
**caractérisé en ce que** ledit matériau non adhésif est du silicone.

5. Procédé selon l'une quelconque des revendications 1 à 4,
**caractérisé en ce que** ledit sous-ensemble inférieur (10) comporte au moins un premier pli (13) des premières fibres (11).

6. Procédé selon l'une quelconque des revendications 1 à 5,
**caractérisé en ce que** ledit sous-ensemble supérieur (20) comporte au moins un deuxième pli (23) des deuxièmes fibres (21).

7. Procédé selon l'une quelconque des revendications 1 à 6,
**caractérisé en ce que** ledit organe métallique (31) comprend des ouvertures (33) traversant cet organe métallique (31).

8. Procédé selon l'une quelconque des revendications 1 à 7,
**caractérisé en ce que** ledit organe métallique (31) inclut un grillage en métal (32).

9. Procédé selon la revendication 8,
**caractérisé en ce que** ledit grillage en métal (32) est imprégné d'une troisième résine (34).

10. Procédé selon la revendication 9,
**caractérisé en ce que** lesdites première résine (12), deuxième résine (22) et troisième résine (34) sont identiques.

11. Procédé selon l'une quelconque des revendications 1 à 10,
**caractérisé en ce que** ladite au moins une cavité (45) est effilée selon un sens (60) allant de la face supérieure (42) vers la face inférieure (41).

12. Procédé selon l'une quelconque des revendications 1 à 11,
**caractérisé en ce que** ladite au moins une cavité (45) a une forme d'un cône tronqué (46), cette forme d'un cône tronqué s'étendant dune base (47) affleurant la face supérieure (42) vers un sommet (48) affleurant la face inférieure (41).

13. Procédé selon l'une quelconque des revendications 1 à 12,
**caractérisé en ce que** ledit masque (40) est déformable élastiquement et manuellement.

14. Procédé selon l'une quelconque des revendications 1 à 13,
**caractérisé en ce que** ledit masque (40) a une épaisseur (70) entre la face inférieure (41) et la face supérieure (42) comprise entre 0.5 millimètre et 1.5 millimètre.

15. Procédé selon l'une quelconque des revendications 1 à 14,
**caractérisé en ce que** ladite au moins une cavité (45) présente une section inférieure (49) affleurant la face inférieure (41), la section inférieure (49) étant contenue dans un cercle (75), ledit cercle (75) ayant un diamètre (76) compris entre 0.3 millimètre et 3 millimètres.

16. Procédé selon l'une quelconque des revendications 1 à 15,
**caractérisé en ce que** ladite au moins une cavité (45) incluant au moins deux cavités, chaque cavité présentant une section inférieure (49) affleurant la face inférieure (41), chaque section inférieure (49) étant contenue dans un cercle (75) ayant un diamètre (76), deux dites cavités (45) adjacentes étant séparées par une distance (77) comprise entre deux fois ledit diamètre (76) et 10 fois ledit diamètre (76) du cercle (75) contenant une des deux dites cavités (45) adjacentes.

17. Procédé selon l'une quelconque des revendications 1 à 16,
**caractérisé en ce que** ledit procédé comporte une étape de polymérisation à vide faisant suite au placement sous-ensemble supérieur (20) sur l'organe métallique (31) puis une étape durant laquelle ledit au moins un masque (40) est retiré.

## Patentansprüche

1. Verfahren zur Herstellung einer Verbundstruktur (1), wobei die Verbundstruktur (1) eine untere Untergruppe (10) umfasst, wobei die untere Untergruppe (10) zumindest erste Fasern (11) und ein erstes Harz (12) aufweist, wobei die Verbundstruktur (1) eine elektrisch leitfähige Schicht (30) umfasst, die mit einem metallischen Element (31) versehen ist, wobei die Verbundstruktur (1) eine obere Untergruppe (20) umfasst, die zumindest zweite Fasern (21) und ein zweites Harz (22) aufweist, wobei das Verfahren ein Anordnen des metallischen Elements (31) auf der unteren Untergruppe (10) und ein Platzieren von mindestens einer Maske (40) mindestens auf einem elektrischen Verbindungsbereich (35) des metallischen Elements (31) umfasst,
**dadurch gekennzeichnet, dass** das Platzieren mindestens einer Maske (40) das Platzieren mindestens einer Maske (40) umfasst, die sich in einer Erhebungsrichtung (Z) von einer an dem metallischen Element (31) angeordneten Unterseite (41) zu einer Oberseite (42) erstreckt, wobei die mindestens eine Maske (40) mindestens einen Hohlraum (45) umfasst, wobei der mindestens eine Hohlraum (45) die Maske (40) in der Erhebungsrichtung (Z) durchdringt, indem er sich von der Unterseite (41) bis zur Oberseite (42) erstreckt, wobei das Verfahren ein Anordnen der oberen Untergruppe (20) an mindestens einem Teil der Oberseite (42) des metallischen Elements (31), der nicht von der mindestens einen Maske bedeckt ist, umfasst.

2. Verfahren nach Anspruch 1,
**dadurch gekennzeichnet, dass** die Maske (40) ein nicht klebendes Material enthält.

3. Verfahren nach Anspruch 2,
**dadurch gekennzeichnet, dass** das nicht klebende Material Polytetrafluorethylen ist.

4. Verfahren nach Anspruch 2,
**dadurch gekennzeichnet, dass** das nicht klebende Material Silikon ist.

5. Verfahren nach einem der Ansprüche 1 bis 4,
**dadurch gekennzeichnet, dass** die untere Untergruppe (10) mindestens eine erste Lage (13) der ersten Fasern (11) aufweist.

6. Verfahren nach einem der Ansprüche 1 bis 5,
**dadurch gekennzeichnet, dass** die obere Untergruppe (20) mindestens eine zweite Lage (23) der zweiten Fasern (21) aufweist.

7. Verfahren nach einem der Ansprüche 1 bis 6,
**dadurch gekennzeichnet, dass** das metallische Element (31) Öffnungen (33) aufweist, die durch das metallische Element (31) hindurchgehen.

8. Verfahren nach einem der Ansprüche 1 bis 7,
**dadurch gekennzeichnet, dass** das Metallorgan (31) ein Metallgitter (32) umfasst.

9. Verfahren nach Anspruch 8,
**dadurch gekennzeichnet, dass** das Metallgitter (32) mit einem dritten Harz (34) imprägniert ist.

10. Verfahren nach Anspruch 9,
**dadurch gekennzeichnet, dass** das erste Harz (12), das zweite Harz (22) und das dritte Harz (34) identisch sind.

11. Verfahren nach einem der Ansprüche 1 bis 10,
**dadurch gekennzeichnet, dass** der mindestens eine Hohlraum (45) in einer Richtung (60) von der Oberseite (42) zur Unterseite (41) hin verjüngt ist.

12. Verfahren nach einem der Ansprüche 1 bis 11,
**dadurch gekennzeichnet, dass** der mindestens eine Hohlraum (45) eine Form eines Kegelstumpfes (46) hat, wobei sich diese Form eines Kegelstumpfes von einer mit der Oberseite (42) bündigen Basis (47) zu einem mit der Unterseite (41) bündigen Scheitel (48) erstreckt.

13. Verfahren nach einem der Ansprüche 1 bis 12,
**dadurch gekennzeichnet, dass** die Maske (40) elastisch und manuell verformbar ist.

14. Verfahren nach einem der Ansprüche 1 bis 13,
**dadurch gekennzeichnet, dass** die Maske (40) zwischen der Unterseite (41) und der Oberseite (42) eine Dicke (70) zwischen 0,5 Millimetern und 1,5 Millimetern aufweist.

15. Verfahren nach einem der Ansprüche 1 bis 14,
**dadurch gekennzeichnet, dass** der mindestens eine Hohlraum (45) einen mit der Unterseite (41) bündigen unteren Abschnitt (49) aufweist, wobei der untere Abschnitt (49) in einem Kreis (75) enthalten ist, wobei der Kreis (75) einen Durchmesser (76) zwischen 0,3 Millimetern und 3 Millimetern aufweist.

16. Verfahren nach einem der Ansprüche 1 bis 15,
**dadurch gekennzeichnet, dass** der mindestens eine Hohlraum (45) mindestens zwei Hohlräume umfasst, wobei jeder Hohlraum einen unteren Querschnitt (49) aufweist, der mit der Unterseite (41) bündig ist, wobei jeder untere Querschnitt (49) in einem Kreis (75) mit einem Durchmesser (76) enthalten ist, wobei zwei benachbarte Hohlräume (45) durch einen Abstand (77) getrennt sind, der zwischen dem Zweifachen des Durchmessers (76) und dem Zehnfachen des Durchmessers (76) des Kreises (75) liegt, der einen der beiden benachbarten Hohlräume (45) enthält.

17. Verfahren nach einem der Ansprüche 1 bis 16,
**dadurch gekennzeichnet, dass** das Verfahren einen Schritt des Vakuumpolymerisierens, der auf das Platzieren der oberen Untergruppe (20) auf dem metallischen Element (31) folgt, und dann einen Schritt umfasst, in dem die mindestens eine Maske (40) entfernt wird.

## Claims

1. Method for manufacturing a composite structure (1), the said composite structure (1) comprising a lower sub-assembly (10), the lower sub-assembly (10) being at least provided with first fibres (11) and a first resin (12), the said composite structure (1) comprising an electrically conductive layer (30) provided with a metallic member (31), the said composite structure (1) comprising an upper sub-assembly (20) at least provided with second fibres (21) and a second resin (22), the said method involving an arrangement of the said metallic member (31) on the lower sub-assembly (10) and a placement of at least one shield (40) on at least one electrical connection area (35) of the said metallic member (31), **characterised in that** the said placement of at least one shield (40) involves the placement of at least one shield (40) extending in an elevation direction (Z) from a lower face (41) arranged against the metallic member (31) to an upper face (42), the said at least one shield (40) comprising at least one cavity (45), the said at least one cavity (45) passing all the way through the shield (40) in the elevation direction (Z) by extending from the lower face (41) to the upper face (42), the said method involving a placement of the upper sub-assembly (20) at least against a portion of the upper face (42) of the metallic member (31) not covered by the at least one shield.

2. Method according to claim 1, **characterised in that** the said shield (40) includes a non-adhesive material.

3. Method according to claim 2, **characterised in that** the said non-adhesive material is polytetrafluoroethylene.

4. Method according to claim 2, **characterised in that** the said non-adhesive material is silicone.

5. Method according to any one of claims 1 to 4, **characterised in that** the said lower sub-assembly (10) comprises at least a first fold (13) of the first fibres (11).

6. Method according to any one of claims 1 to 5, **characterised in that** the said upper sub-assembly (20) comprises at least a second fold (23) of the second fibres (21).

7. Method according to any one of claims 1 to 6, **characterised in that** the said metallic member (31) comprises openings (33) passing through this metallic member (31).

8. Method according to any one of claims 1 to 7, **characterised in that** the said metallic member (31) includes a metal grating (32).

9. Method according to claim 8, **characterised in that** the said metal grating (32) is impregnated with a third resin (34).

10. Method according to claim 9, **characterised in that** the said first resin (12), second resin (22) and third resin (34) are identical.

11. Method according to any one of claims 1 to 10, **characterised in that** the said at least one cavity (45) is tapered in a direction (60) from the upper face (42) towards the lower face (41).

12. Method according to any one of claims 1 to 11, **characterised in that** the said at least one cavity (45) has the shape of a truncated cone (46), this shape of a truncated cone extending from a base (47) flush with the upper face (42) to a summit (48) flush with the lower face (41).

13. Method according to any one of claims 1 to 12, **characterised in that** the said shield (40) is elastically and manually deformable.

14. Method according to any one of claims 1 to 13, **characterised in that** the said shield (40) has a thickness (70) between the lower face (41) and the upper face (42) of between 0.5 millimetres and 1.5 millimetres inclusive.

15. Method according to any one of claims 1 to 14, **characterised in that** the said at least one cavity (45) has a lower section (49) flush with the lower face (41), the said lower section (49) being contained within a circle (75), the said circle (75) having a diameter (76) of between 0.3 millimetres and 3 millimetres inclusive.

16. Method according to any one of claims 1 to 15, **characterised in that** the said at least one cavity (45) includes at least two cavities, each cavity having a lower section (49) flush with the lower face (41), each lower section (49) being contained within a circle (75) having a diameter (76), two adjacent said cavities (45) being separated by a distance (77) of between twice the said diameter (76) and 10 times the said diameter (76) of the circle (75) containing one of the two adjacent said cavities (45).

17. Method according to any one of claims 1 to 16, **characterised in that** the said method involves a step of vacuum polymerisation following the placement of the upper sub-assembly (20) on the metallic member (31) and then a step during which the said at least one shield (40) is removed.
